# EUROPEAN PATENT SPECIFICATION

(11) **EP 4 362 518 B1**
(45) Date of publication and mention of the grant of the patent: **25.02.2026**
(21) Application number: 22845215.7
(22) Date of filing: 14.07.2022
(51) Int. Cl.: H04L 9/40, H04W 8/26, H04W 12/00

(54) **METHOD FOR CONTROLLING TERMINAL TO ACCESS NETWORK, AND DEVICE, SYSTEM, APPARATUS AND STORAGE MEDIUM**
VERFAHREN ZUR STEUERUNG EINES ENDGERÄTS FÜR DEN ZUGRIFF AUF EIN NETZWERK SOWIE VORRICHTUNG, SYSTEM, VORRICHTUNG UND SPEICHERMEDIUM
PROCÉDÉ DE COMMANDE D'ACCÈS À UN RÉSEAU PAR UN TERMINAL, ET DISPOSITIF, SYSTÈME, APPAREIL ET SUPPORT DE STOCKAGE

(30) Priority: 19.07.2021 CN 202110812866; 14.09.2021 CN 202111074026
(43) Date of publication of application: 01.05.2024
(73) Proprietor: Huawei Technologies Co., Ltd., Shenzhen, Guangdong 518129 (CN)
(72) Inventor: PAN, Wei, Shenzhen, Guangdong 518129 (CN); ZHANG, Yinxi, Shenzhen, Guangdong 518129 (CN); ZHANG, Ting, Shenzhen, Guangdong 518129 (CN)
(74) Representative: Pfenning, Meinig & Partner mbB
(86) International application number: PCT/CN2022/105679
(87) International publication number: WO 2023/001050

(56) References cited:
- CN-A- 111 611 613
- CN-A- 112 165 391
- US-A1- 2017 149 614
- US-A1- 2018 115 885
- US-A1- 2018 367 570
- US-A1- 2019 319 953
- US-A1- 2020 374 691
- US-A1- 2020 409 957

## Description

### TECHNICAL FIELD

This application relates to the field of internet of things, and in particular, to a method for controlling a terminal to access a network, an access device, a network system, a computer-readable storage medium and a computer program product.

### BACKGROUND

Under a development trend of "internet of everything", a large quantity of internet of things (internet of things, IoT) terminals access a network in various industries. However, internet of things security issues are emerging. Therefore, security of accessing a network by the IoT terminals becomes especially important. Based on this, a method for controlling an IoT terminal to access a network urgently needs to be provided, to reduce a network security risk caused when the IoT terminal accesses the network.

US 2020/374691 A1 discloses a communication method, a related apparatus, and a storage medium, to adapt to a solution in which a user plane integrity protection algorithm can be flexibly and independently negotiated.

US 2019/319953 A1 discloses techniques for providing secure modification of manufacturer usage description (MUD) files based on device applications.

US 2020/0409957 A1 discloses distributed cardinality optimization.

### SUMMARY

Embodiments of this application provide a method for controlling a terminal to access a network according to claim 1, an access device according to claim 10, a network system according to claim 11, a computer-readable storage medium according to claim 13, and a computer program product according to claim 14, to improve security of a network access of an IoT terminal. Technical solutions are as follows:

According to a first aspect, a method for controlling a terminal to access a network is provided. The method includes: obtaining an industrial internet identifier of an internet of things IoT terminal; obtaining a network admission policy of the IoT terminal based on the industrial internet identifier of the IoT terminal, where the network admission policy is determined based on information about the IoT terminal indicated by the industrial internet identifier of the IoT terminal; and controlling, based on the network admission policy of the IoT terminal, the IoT terminal to access a network.

Because the information about the IoT terminal indicated by the industrial internet identifier of the IoT terminal is accurate, the network admission policy of the IoT terminal that is determined based on the information about the IoT terminal indicated by the industrial internet identifier of the IoT terminal is also accurate. Based on this, access of the terminal is controlled based on the network admission policy, so that a network security risk caused when the IoT terminal accesses a network can be reduced, and security of accessing the network by the IoT terminal can be improved.

An implementation process of obtaining the network admission policy of the IoT terminal based on the industrial internet identifier of the IoT terminal may be: obtaining the information about the IoT terminal indicated by the industrial internet identifier of the IoT terminal, where the information about the IoT terminal includes a network attribute of the IoT terminal; and determining the network admission policy of the IoT terminal based on the network attribute of the IoT terminal.

Because the network attribute of the IoT terminal can accurately describe the IoT terminal, the network admission policy of the IoT terminal obtained based on the network attribute of the IoT terminal is also accurate.

Optionally, the network attribute includes at least one of access configuration information, service level agreement (service level agreement, SLA) information, network security information, and software list information that indicate the IoT terminal.

The network attribute of the IoT terminal includes at least one of the foregoing, and the information can accurately describe the IoT terminal from a plurality of dimensions. Therefore, the network admission policy of the IoT terminal obtained based on the foregoing network attribute is more accurate.

Optionally, the network admission policy includes at least one of an access control list (access control list, ACL) policy, a quality of service (quality of service, QoS) policy, a security protocol policy, and a software security control policy.

Optionally, an implementation process of determining the network admission policy of the IoT terminal based on the network attribute of the IoT terminal may be: when the network attribute includes the access configuration information, obtaining the ACL policy of the IoT terminal based on the access configuration information of the IoT terminal, where the access configuration information of the IoT terminal includes at least one of address information, port information, protocol information, and corresponding action information.

Because the access configuration information of the IoT terminal is pre-configured related information of a network access behavior that may be performed by the IoT terminal, the ACL policy of the IoT terminal obtained based on the access configuration information can accurately control the network access behavior of the IoT terminal.

Optionally, an implementation process of determining the network admission policy of the IoT terminal based on the network attribute of the IoT terminal may be: when the network attribute includes the SLA information, obtaining the QoS policy of the IoT terminal based on the SLA information of the IoT terminal, where the SLA information of the IoT terminal includes at least one of a bandwidth requirement, a priority requirement, and a delay requirement of the IoT terminal.

The QoS policy is obtained based on the SLA information of the IoT terminal, and a required bandwidth and a required priority are allocated to the IoT terminal based on the QoS policy. In this way, it can be ensured that a service on the IoT terminal can meet the delay requirement.

Optionally, an implementation process of determining the network admission policy of the IoT terminal based on the network attribute of the IoT terminal may be: when the network attribute includes the network security information, obtaining the security protocol policy of the IoT terminal based on the network security information of the IoT terminal, where the network security information of the IoT terminal includes information about a security protocol supported by the IoT terminal.

The security protocol policy of the IoT terminal indicates the IoT terminal to access a network based on a procedure of the security protocol supported by the IoT terminal, so that security of accessing the network by the IoT terminal can be ensured.

Optionally, an implementation process of determining the network admission policy of the IoT terminal based on the network attribute of the IoT terminal may be: when the network attribute includes the software list information, obtaining the software security control policy of the IoT terminal based on the software list information of the IoT terminal, where the software security control policy indicates whether to allow access of the IoT terminal or indicates to perform security control on software used by the IoT terminal, and the software list information includes information about the software used by the IoT terminal.

The software security control policy is obtained based on the software list information of the IoT terminal, and then based on the software security control policy, whether to allow the IoT terminal to access the network is controlled or the security control is performed on the software used by the IoT terminal. In this way, a risk caused when the IoT terminal accesses the network can be effectively reduced, and security of accessing the network by the IoT terminal can be further improved.

According to the first aspect, an implementation process of obtaining the information about the IoT terminal indicated by the industrial internet identifier of the IoT terminal may be: sending the industrial internet identifier of the IoT terminal to an identifier resolution server; receiving indication information, of the network attribute, that corresponds to the industrial internet identifier of the IoT terminal and that is sent by the identifier resolution server; and obtaining the network attribute of the IoT terminal from an extended information server based on the indication information of the network attribute.

Optionally, an implementation process of obtaining the network admission policy of the IoT terminal based on the industrial internet identifier of the IoT terminal may be: obtaining the information about the IoT terminal indicated by the industrial internet identifier of the IoT terminal, where the information about the IoT terminal includes a device attribute of the IoT terminal; determining a terminal type of the IoT terminal based on the device attribute of the IoT terminal; and obtaining the network admission policy of the IoT terminal based on the terminal type of the IoT terminal.

Because the device attribute obtained based on the industrial internet identifier is accurate, the terminal type of the IoT terminal determined based on the device attribute is also more accurate. Based on this, the network admission policy obtained based on the terminal type of the IoT terminal is also accurate, so that security of accessing the network by the IoT terminal is improved.

Optionally, an implementation process of obtaining the information about the IoT terminal indicated by the industrial internet identifier of the IoT terminal may be: sending the industrial internet identifier of the IoT terminal to an identifier resolution server; and receiving the information, about the IoT terminal, that corresponds to the industrial internet identifier of the IoT terminal and that is sent by the identifier resolution server.

According to a second aspect, an apparatus for controlling a terminal to access a network is provided. The apparatus for controlling a terminal to access a network has a function of implementing behaviors of the method for controlling a terminal to access a network in the first aspect. The apparatus for controlling a terminal to access a network includes at least one module. The at least one module is configured to implement the method for controlling a terminal to access a network provided in the first aspect.

According to a third aspect, an access device is provided. A structure of the access device includes a processor and a memory. The memory is configured to store a program that supports the access device in performing the method for controlling a terminal to access a network provided in the first aspect, and store data used for implementing the method for controlling a terminal to access a network provided in the first aspect. The processor is configured to execute the program stored in the memory.

According to a fourth aspect, a network system is provided. The network system includes an IoT terminal and an access device. The IoT terminal is configured to send an industrial internet identifier of the IoT terminal to the access device. The access device is configured to obtain the industrial internet identifier of the IoT terminal; obtain a network admission policy of the IoT terminal based on the industrial internet identifier of the IoT terminal, where the network admission policy is determined based on information about the IoT terminal indicated by the industrial internet identifier of the IoT terminal; and control, based on the network admission policy of the IoT terminal, the IoT terminal to access a network.

Because the information about the IoT terminal indicated by the industrial internet identifier of the IoT terminal is accurate, the network admission policy of the IoT terminal that is determined based on the information about the IoT terminal indicated by the industrial internet identifier of the IoT terminal is also accurate. Based on this, access of the terminal is controlled based on the network admission policy, so that a network security risk caused when the IoT terminal accesses a network can be reduced, and security of accessing the network by the IoT terminal can be improved.

The access device is configured to: obtain the information about the IoT terminal indicated by the industrial internet identifier of the IoT terminal, where the information about the IoT terminal includes a network attribute of the IoT terminal; and determine the network admission policy of the IoT terminal based on the network attribute of the IoT terminal.

Optionally, the network system further includes an admission controller. The access device is configured to send the industrial internet identifier of the IoT terminal to the admission controller. The admission controller is configured to obtain the information about the IoT terminal indicated by the industrial internet identifier of the IoT terminal; determine the network admission policy of the IoT terminal based on the information about the IoT terminal, where the information about the IoT terminal includes the network attribute of the IoT terminal; and send the network admission policy of the IoT terminal to the access device. The access device is further configured to receive the network admission policy of the IoT terminal sent by the admission controller.

Optionally, the network attribute includes at least one of access configuration information, SLA information, network security information, and software list information that indicate the IoT terminal.

Optionally, the network admission policy includes at least one of an access control list ACL policy, a QoS policy, a security protocol policy, and a software security control policy.

Optionally, the access device is configured to: obtain the information about the IoT terminal indicated by the industrial internet identifier of the IoT terminal, where the information about the IoT terminal includes a device attribute of the IoT terminal; determine a terminal type of the IoT terminal based on the device attribute of the IoT terminal; and obtain the network admission policy of the IoT terminal based on the terminal type of the IoT terminal.

According to a fifth aspect, a computer-readable storage medium is provided. The computer-readable storage medium stores instructions, and when the instructions are run on a computer, the computer is enabled to perform the method for controlling a terminal to access a network according to the first aspect.

According to a sixth aspect, a computer program product including instructions is provided. When the computer program product runs on a computer, the computer is enabled to perform the method for controlling a terminal to access a network according to the first aspect.

Technical effects obtained in the second aspect, the third aspect, the fourth aspect, the fifth aspect, and the sixth aspect are similar to the technical effects obtained by using corresponding technical means in the first aspect. Details are not described herein again.

Beneficial effects brought by the technical solutions provided in embodiments of this application include at least the following.

In embodiments of this application, because information about an IoT terminal indicated by an industrial internet identifier of the IoT terminal is accurate, a network admission policy of the IoT terminal that is determined based on the information about the IoT terminal indicated by the industrial internet identifier of the IoT terminal is also accurate. Based on this, access of the terminal is controlled based on the network admission policy, so that a network security risk caused when the IoT terminal accesses a network can be reduced, and security of accessing the network by the IoT terminal can be improved.

### BRIEF DESCRIPTION OF DRAWINGS

FIG. 1 is a diagram of a system architecture involved in a method for controlling a terminal to access a network according to an embodiment of this application;
FIG. 2 is a schematic diagram of a structure of a network device according to an embodiment of this application;
FIG. 3 is a flowchart of a method for controlling a terminal to access a network according to an embodiment of this application;
FIG. 4 is another flowchart of a method for controlling a terminal to access a network according to an embodiment of this application;
FIG. 5 is another flowchart of a method for controlling a terminal to access a network according to an embodiment of this application;
FIG. 6 is another flowchart of a method for controlling a terminal to access a network according to an embodiment of this application; and
FIG. 7 is a schematic diagram of a structure of an apparatus for controlling a terminal to access a network according to an embodiment of this application.

### DESCRIPTION OF EMBODIMENTS

To make the objectives, technical solutions, and advantages of this application clearer, the following further describes implementations of this application in detail with reference to the accompanying drawings.

Before embodiments of this application are described in detail, a system architecture in embodiments of this application is first described.

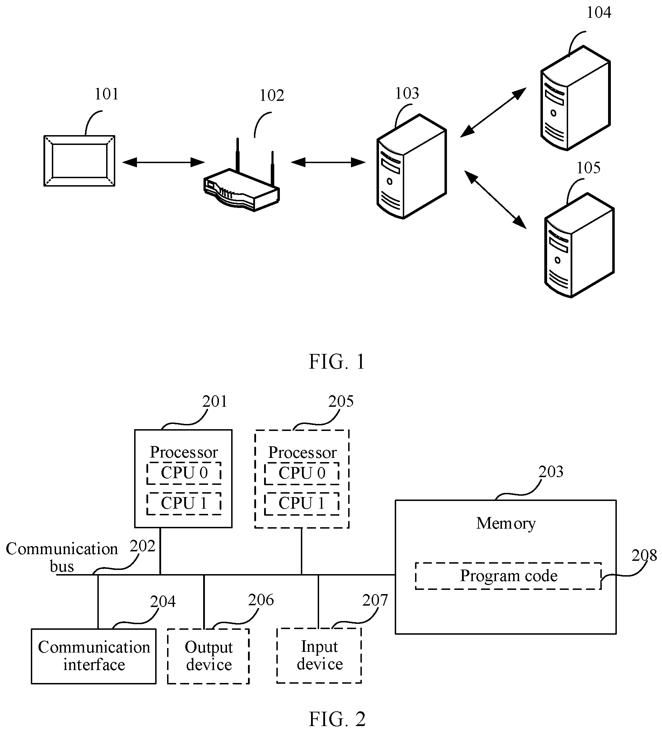

FIG. 1 is a diagram of a network system architecture involved in a method for controlling a terminal to access a network according to an embodiment of this application. As shown in FIG. 1, the network system includes an IoT terminal 101 and an access device 102. A communication connection may be established between the IoT terminal 101 and the access device 102.

In this embodiment of this application, when the IoT terminal 101 needs to access a network, the IoT terminal 101 may send an industrial internet identifier of the IoT terminal 101 to the access device 102.

After receiving the industrial internet identifier of the IoT terminal, the access device 102 may obtain a network admission policy of the IoT terminal 101 based on the industrial internet identifier of the IoT terminal 101, and then control, based on the network admission policy of the IoT terminal, the IoT terminal 101 to access the network.

In a possible implementation, the access device 102 may obtain information about the IoT terminal 101 based on the industrial internet identifier of the IoT terminal 101, and further obtain the network admission policy of the IoT terminal 101 based on the information about the IoT terminal 101.

In some other possible implementations, the network system may further include an admission controller 103. In this case, the access device 102 may send the received industrial internet identifier of the IoT terminal 101 to the admission controller 103. Then, after receiving the industrial internet identifier of the IoT terminal 101, the admission controller 103 may obtain the information about the IoT terminal 101 based on the industrial internet identifier of the IoT terminal 101, and further obtain the network admission policy of the IoT terminal 101 based on the information about the IoT terminal 101. Then, the admission controller may send the network admission policy of the IoT terminal 101 to the access device 102. In this way, after receiving the network admission policy of the IoT terminal 101, the access device 102 may control, based on the network admission policy, the IoT terminal 101 to access the network.

The network system further includes an identifier resolution server 104. Based on this, when obtaining the information about the IoT terminal 101 based on the industrial internet identifier of the IoT terminal 101, the access device 102 or the admission controller 103 may first send the industrial internet identifier of the IoT terminal 101 to the identifier resolution server 104. After receiving the industrial internet identifier of the IoT terminal 101, the identifier resolution server 104 may obtain the information that is about the IoT terminal and that corresponds to the industrial internet identifier of the IoT terminal, and send the obtained information about the IoT terminal to the access device 102 or the admission controller 103. The information about the IoT terminal 101 may include a device attribute and/or a network attribute.

The network system further includes an extended information server 105. In this case, after receiving the industrial internet identifier of the IoT terminal 101, the identifier resolution server 104 may obtain indication information that is of the network attribute of the IoT terminal and that corresponds to the industrial internet identifier of the IoT terminal, and return the indication information of the network attribute of the IoT terminal to the access device 102 or the admission controller 103. Correspondingly, after receiving the indication information of the network attribute of the IoT terminal, the access device 102 or the admission controller 103 may obtain the network attribute of the IoT terminal from the extended information server 105 based on the indication information. The indication information may be a uniform resource locator (uniform resource locator, URL) corresponding to the network attribute of the IoT terminal. It should be noted that when feeding back the indication information of the network attribute of the IoT terminal 101 to the access device 102 and the admission controller 103, the identifier resolution server 104 may further feed back the device attribute of the IoT terminal 101 to the access device 102 or the admission controller 103.

It should be noted that the IoT terminal 101 may be an internet of things device such as a smart television, a camera, or a smart refrigerator. The access device 102 may be a gateway device configured to access the internet of things. The admission controller 103 may be an independent device specially disposed for obtaining the network admission policy, or an authentication device in a remote authentication dial in user service (remote authentication dial in user service, RADIUS) system, for example, an authentication, authorization, accounting (authentication, authorization, accounting, AAA) server. The identifier resolution server 104 is a server configured to resolve an industrial internet identifier in an industrial internet identifier resolution system. The extended information server 105 may be a server that is additionally disposed and configured to store extended information such as the network attribute. The identifier resolution server 104 and the extended information server 105 may be an independent server, or may be a server cluster. This is not limited in this embodiment of this application.

FIG. 2 is a schematic diagram of a structure of a network device according to an embodiment of this application. Both the access device and the admission controller in FIG. 1 may be implemented through the network device. Refer to FIG. 2. The network device includes at least one processor 201, a communication bus 202, a memory 203, and at least one communication interface 204.

The processor 201 may be a general-purpose central processing unit (central processing unit, CPU), a network processor (network processor, NP), a microprocessor, or one or more integrated circuits configured to implement the solutions of this application, for example, an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable gate array (field-programmable gate array, FPGA), generic array logic (generic array logic, GAL), or any combination thereof.

The communication bus 202 is configured to transmit information between the foregoing components. The communication bus 202 may be classified into an address bus, a data bus, a control bus, and the like. For ease of indication, the bus is indicated by using only one bold line in the figure. However, it does not indicate that there is only one bus or only one type of bus.

The memory 203 may be a read-only memory (Read-Only Memory, ROM), a random access memory (Random Access Memory, RAM), another type of static storage device that can store static information and instructions, another type of dynamic storage device that can store information and instructions, an electrically erasable programmable read-only memory (Electrically Erasable Programmable Read-Only Memory, EEPROM), a compact disc read-only memory (Compact Disc Read-Only Memory, CD-ROM), another optical disc storage, an optical disc storage (including a compact disc, a laser disc, an optical disc, a digital versatile disc, a Blu-ray disc, and the like), a magnetic disk storage medium, another magnetic storage device, or any other medium that can be configured to carry or store expected program code in a form of an instruction or a data structure and that can be accessed by a network device, but is not limited thereto. The memory 203 may exist independently, or may be connected to the processor 201 by the communication bus 202, or may be integrated with the processor 201.

The communication interface 204 is configured to communicate with another device or a communication network through any transceiver-type apparatus. The communication interface 204 includes a wired communication interface, and may further include a wireless communication interface. The wired communication interface may be, for example, an Ethernet interface. The Ethernet interface may be an optical interface, an electrical interface, or a combination thereof. The wireless communication interface may be a wireless local area network (wireless local area network, WLAN) interface, a cellular network communication interface, or a combination thereof.

In an embodiment, the processor 201 may include one or more CPUs, for example, a CPU 0 and a CPU 1 shown in FIG. 2.

In an embodiment, the network device may include a plurality of processors, for example, the processor 201 and a processor 205 shown in FIG. 2. Each of the processors may be a single-core processor (single-CPU) or may be a multi-core processor (multi-CPU). The processor herein may refer to one or more devices, circuits, and/or processing cores configured to process data.

In an embodiment, the network device may further include an output device 206 and an input device 207. The output device 206 communicates with the processor 201, and may display information in a plurality of manners. For example, the output device 206 may be a liquid crystal display (liquid crystal display, LCD), a light emitting diode (light emitting diode, LED) display device, a cathode ray tube (cathode ray tube, CRT) display device, a projector (projector), or the like. The input device 207 communicates with the processor 201, and may receive input of a user in a plurality of manners. For example, the input device 207 may be a mouse, a keyboard, a touchscreen device, a sensing device, or the like.

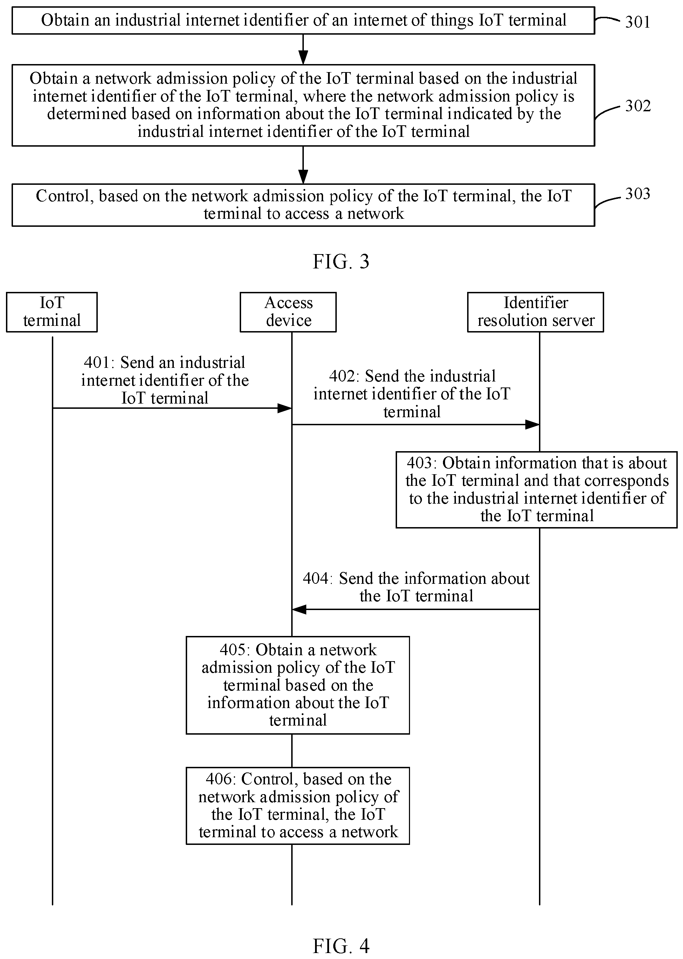

The memory 203 is configured to store program code 208 for executing the solutions of this application, and the processor 201 is configured to execute the program code 208 stored in the memory 203. The network device may implement, through the processor 201 and the program code 208 in the memory 203, a method for controlling a terminal to access a network provided in the following embodiment in FIG. 3.

A method for controlling a terminal to access a network according to an embodiment of this application is described in detail below.

FIG. 3 is a flowchart of a method for controlling a terminal to access a network according to an embodiment of this application. The method may be performed by the access device shown in FIG. 1. Refer to FIG. 3. The method includes the following steps.

Step 301: Obtain an industrial internet identifier of an IoT terminal.

In this embodiment of this application, when the IoT terminal accesses a network, the IoT terminal may obtain the industrial internet identifier of the IoT terminal, and send the obtained industrial internet identifier of the IoT terminal to an access device, and the access device receives the industrial internet identifier of the IoT terminal.

In an industrial internet, one industrial internet identifier can uniquely identify one IoT device. The industrial internet identifier may include an identifier prefix and an identifier suffix. Each of the identifier prefix and the identifier suffix may include a plurality of character segments, and each character segment indicates one type of information about the IoT terminal. For example, the industrial internet identifier is 86.100.1/xx.yy.zz.mm, where 86.100.1 is an identifier prefix, 86 in the identifier prefix is a country code, 100 is an enterprise code, and 1 is an industry code. xx.yy.zz.mm is an identifier suffix. In the identifier suffix, xx is a category code of the IoT terminal, yy is a product code, zz is a serial number code, and mm is an extended information code. A plurality of codes can be obtained by resolving the industrial internet identifier, and information about the IoT terminal can be obtained based on the plurality of codes.

In a possible case, an identification code may be disposed outside the IoT terminal, and the industrial internet identifier of the IoT terminal may be included in the identification code. The identification code may be a bar code, a two-dimensional code, or a radio frequency label. Certainly, the identification code may be another type of code or a label. This is not limited in this embodiment of this application. Based on this, a user may read the identification code outside the IoT terminal through a scanning device, to obtain the industrial internet identifier of the IoT terminal, and then input the industrial internet identifier of the IoT terminal to the IoT terminal, so that the IoT terminal sends the received industrial internet identifier of the IoT terminal to the access device. Alternatively, the scanning device may directly transmit the industrial internet identifier obtained through scanning to the IoT terminal, so that the IoT terminal sends the received industrial internet identifier of the IoT terminal to the access device. Alternatively, the scanning device may directly transmit the industrial internet identifier obtained through scanning to the access device. Alternatively, in another possible implementation, the user may directly statically configure, into the access device, the industrial internet identifier of the IoT terminal that is obtained through the scanning device.

In another possible case, the industrial internet identifier of the IoT terminal is stored in hardware of the IoT terminal. For example, the industrial internet identifier of the IoT terminal may be stored in any one of a universal integrated circuit card (universal integrated circuit card, UICC), a module, or a microcontroller unit (microcontroller unit, MCU) chip of the IoT terminal. Based on this, the IoT terminal may directly obtain the industrial internet identifier of the IoT terminal from the hardware of the IoT terminal that stores the industrial internet identifier, and then send the industrial internet identifier of the IoT terminal to the access device.

It should be noted that when sending the industrial internet identifier of the IoT terminal to the access device, the IoT terminal may include the industrial internet identifier in a service packet and send the industrial internet identifier to the access device, or may send the industrial internet identifier to the access device in another manner. This is not limited in this embodiment of this application.

Step 302: Obtain a network admission policy of the IoT terminal based on the industrial internet identifier of the IoT terminal. The network admission policy is determined based on information about the IoT terminal indicated by the industrial internet identifier of the IoT terminal.

The information about the IoT terminal includes a network attribute of the IoT terminal and/or a device attribute of the IoT terminal.

For example, the network attribute of the IoT terminal includes at least one of access configuration information, SLA information, network security information, and software list information that indicate the IoT terminal.

The access configuration information of the IoT terminal is pre-configured related information of a network access behavior that may be performed by the IoT terminal, for example, at least one of address information, port information, protocol information, and corresponding action information.

For example, the address information may include a source address and a destination address. The source address may include an internet Protocol (internet protocol, IP) address of the IoT terminal, and the destination address may include an IP address of a destination device that may be accessed by the IoT terminal. The IP address may be an internet Protocol version 4 (internet protocol version 4, IPv4) address or address segment, or may be an internet Protocol version 6 (internet protocol version 6, IPv6) address or address segment. Optionally, the source address may further include a domain name of the IoT terminal, and the destination address may further include a domain name of the destination device that may be accessed by the IoT terminal.

The protocol information mainly includes a communication protocol used for communication between the IoT terminal and the destination device that may be accessed by the IoT terminal. The communication protocol may include a transmission control protocol (transmission control protocol, TCP), a user datagram protocol (user datagram protocol, UDP), and an internet control message protocol (internet control message protocol, ICMP). Certainly, the protocol may further include another type of communication protocol. This is not limited in this embodiment of this application.

The port information includes a source port and a destination port. The source port may be port information of the IoT terminal, and the destination port may be port information of the destination device that may be accessed by the IoT terminal. For example, when the IoT terminal communicates with the destination device through a communication protocol, the source port may include a single port or a port segment within a port number range supported by the communication protocol on the IoT terminal. When the IoT terminal communicates with a destination device through a communication protocol, the destination port may include a single port or a port range within a port number range supported by the communication protocol on the destination device.

In addition, the address information, or the address information and the corresponding port information may further correspond to action information. The action information may indicate an action performed on a packet when the packet is sent by using the corresponding address information, or by using the corresponding address information and the corresponding port information. The action performed on the packet may be allowing the packet to pass or discarding the packet.

For example, for a destination address in the address information, if action information corresponding to the destination address is allowing to pass, it indicates that a packet sent to the destination address is allowed to pass.

The SLA information of the IoT terminal includes bandwidth requirement information and/or quality of service (quality of service, QoS) requirement information of the IoT terminal.

The bandwidth requirement information of the IoT terminal may indicate a bandwidth that needs to be occupied by the IoT terminal. Different services on the IoT terminal may also need to occupy different bandwidths. In this case, the bandwidth requirement information of the IoT terminal may include bandwidth requirement information of different services, or the bandwidth requirement information of the IoT terminal may include a maximum bandwidth of the bandwidths that need to be occupied by the services of the IoT terminal.

The QoS requirement information of the IoT terminal may include a priority requirement and delay requirement information of the IoT terminal when sending a packet. The QoS requirement information may be directly requirement information of the IoT terminal, or the QoS requirement information may include QoS requirement information of different services based on different service requirements of the IoT terminal. This is not limited in this embodiment of this application.

The network security information of the IoT terminal includes information about a security protocol supported by the IoT terminal, for example, may include information such as a security protocol type supported by the IoT terminal and a version and algorithm information of the security protocol type supported by the IoT terminal. For example, the security protocol supported by the IoT terminal may be internet protocol security (internet protocol security, IPsec), transport layer security (transport layer security, TLS), or the like. This is not limited in this embodiment of this application.

The software list information of the IoT terminal mainly includes information about software used by the IoT terminal, for example, an identifier and version information of the used software.

In addition, the device attribute of the IoT terminal may include information representing a device feature of the IoT terminal, for example, a production place, a production enterprise, a product category, a product sequence number, a MAC address, and location information of the IoT terminal, and a size of the IoT terminal. This is not limited in this embodiment of this application.

In a possible implementation, after obtaining the industrial internet identifier of the IoT terminal, the access device may obtain the information about the IoT terminal based on the industrial internet identifier of the IoT terminal, and then determine the network admission policy of the IoT terminal based on the obtained information about the IoT terminal.

The access device may send the obtained industrial internet identifier of the IoT terminal to an identifier resolution server. After receiving the industrial internet identifier of the IoT terminal, the identifier resolution server obtains the information that is about the IoT terminal and that corresponds to the industrial internet identifier of the IoT terminal, and sends the obtained information about the IoT terminal to the access device. Correspondingly, the access device receives the information about the IoT terminal fed back by the identifier resolution server.

It should be noted that the identifier resolution server may store a mapping relationship between the industrial internet identifier and terminal information. In this case, the identifier resolution server may obtain, from the mapping relationship, the information that is about the IoT terminal and that corresponds to the industrial internet identifier of the IoT terminal. Alternatively, it can be learned from the foregoing description of the industrial internet identifier that different character segments in the industrial internet identifier may indicate different information. Based on this, the identifier resolution server may obtain the information about the IoT terminal by resolving the industrial internet identifier of the IoT terminal. When the information about the IoT terminal includes the network attribute of the IoT terminal, correspondingly, the industrial internet identifier of the IoT terminal includes one corresponding extended information code that indicates the network attribute of the IoT terminal, and the network attribute of the IoT terminal may be obtained by resolving the extended information code.

Optionally, in an implementation, the network attribute in the information about the IoT terminal may be stored in an extended information server, and the device attribute is stored in the identifier resolution server. Based on this, after receiving the industrial internet identifier of the IoT terminal sent by the access device, the identifier resolution server may obtain indication information that is of the network attribute of the IoT terminal and that corresponds to the industrial internet identifier of the IoT terminal, and return the indication information of the network attribute of the IoT terminal to the access device. Correspondingly, after receiving the indication information of the network attribute of the IoT terminal, the access device may obtain the network attribute of the IoT terminal from the extended information server based on the indication information. The indication information may be a URL of the network attribute of the IoT terminal or information that can indicate a storage location of the network attribute of the IoT terminal.

It should be noted that, the identifier resolution server may obtain the indication information of the network attribute based on the industrial internet identifier of the IoT terminal with reference to the foregoing described method. In addition, the identifier resolution server may further obtain the device attribute of the IoT terminal, to feed back the device attribute of the IoT terminal when feeding back the indication information of the network attribute of the IoT terminal to the access device.

After obtaining the information that is about the IoT terminal and that corresponds to the industrial internet identifier of the IoT terminal, the access device may obtain the network admission policy of the IoT terminal based on the obtained information about the IoT terminal.

In a possible case, if the information about the IoT terminal includes the network attribute of the IoT terminal, the access device may obtain the network admission policy of the IoT terminal based on the network attribute of the IoT terminal. In this case, based on different information included in the network attribute, the obtained network admission policy includes at least one of an access control list (access control list, ACL) policy, a QoS policy, a security protocol policy, and a software security control policy.

For example, when the network attribute of the IoT terminal includes the access configuration information, the access device may obtain the ACL policy of the IoT terminal based on the access configuration information. The ACL policy may include an ACL used to control packet transmission of the IoT terminal.

It can be learned from the foregoing that the access configuration information of the IoT terminal includes at least one of the address information, the port information, the protocol information, and the corresponding action information. The address information, the port information, the protocol information, and the corresponding action information can indicate an address and a port of a destination device that the IoT terminal is allowed to access, and a used communication protocol. Based on this, the access device may obtain the ACL based on the access configuration information. The ACL may include a plurality of list items, and each list item may include a source address, a destination address, and corresponding action information and indicates to perform a corresponding action on a packet sent by using the source address and the destination address. Alternatively, each list item may include a source address, a source port, a destination address, a destination port, and corresponding action information and indicates to perform a corresponding action on a packet sent by using the source address, the destination address, the source port, and the destination port.

Alternatively, the access device may determine, from the access configuration information, address information whose corresponding action information is allowing to pass, and then obtain the ACL based on the address information. In this case, each list item in the ACL includes a source address and a corresponding destination address and indicates to allow a packet sent by using the source address and the destination address to pass. Alternatively, the access device may determine, from the access configuration information, address information whose corresponding action information is allowing to pass and port information corresponding to the address information, and then obtain the ACL based on the address information and the corresponding port information. In this case, each list item in the ACL includes a source address, a destination address, a source port, and a destination port and indicates to allow a packet sent by using the source address, the destination address, the source port, and the destination port to pass.

Certainly, the access device may alternatively determine, from the access configuration information, address information whose corresponding action information is discarding, or address information whose corresponding action information is discarding and port information corresponding to the address information, and then obtain the ACL based on the determined information. In this case, each list item in the ACL indicates to discard a packet sent by using the information in the entry list.

Optionally, in some possible cases, there may be no corresponding action information in the address information or in the address information and the corresponding port information in the access configuration information. In this case, the address information or both the address information and the corresponding port information may be the address and the port of the destination device that the IoT terminal is allowed to access. Based on this, the access device may directly obtain the ACL based on the address information or the address information and the corresponding port information. In this case, each list item in the ACL indicates to allow a packet sent by using information in the list item to pass.

For example, when the network attribute of the IoT terminal includes the SLA information, the access device may obtain the QoS policy of the IoT terminal based on the SLA information of the IoT terminal.

It can be learned from the foregoing description that the SLA information of the IoT terminal includes the bandwidth requirement information and/or the QoS requirement information of the IoT terminal. When the information about the IoT terminal includes the bandwidth requirement information, the access device may allocate a corresponding bandwidth to the IoT terminal based on a bandwidth requirement of each terminal to be accessed in a network. In this case, the QoS policy includes a maximum bandwidth that the IoT terminal is allowed to occupy. When the information about the IoT terminal includes the QoS requirement information, for example, includes a priority requirement and a delay requirement of a packet, the access device may allocate a corresponding packet priority to the IoT terminal based on the priority requirement and the delay requirement, to ensure that the packet of the IoT terminal can meet the delay requirement when reaching the destination device. In this case, the QoS policy includes the packet priority allocated to the IoT terminal. When the SLA information of the IoT terminal includes the bandwidth requirement information and the QoS requirement information, the access device may obtain the QoS policy with reference to both the bandwidth requirement and the QoS requirement. In this case, the QoS policy may include the packet priority, and certainly may also include the maximum bandwidth that the IoT terminal is allowed to occupy. This is not limited in this embodiment of this application.

It should be noted that, in this embodiment of this application, different services of the IoT terminal may have different bandwidth requirement information and/or QoS requirement information. Therefore, the access device may also obtain different QoS policies for different services with reference to the foregoing method.

For example, when the information about the IoT terminal includes the network security information, the access device may obtain the security protocol policy of the IoT terminal based on the network security information of the IoT terminal.

It can be learned from the foregoing description that the network security information of the IoT terminal includes the security protocol type supported by the IoT terminal, and the version and algorithm information of the security protocol type supported by the IoT terminal. Based on this, the access device may obtain the security protocol policy of the IoT terminal based on the security protocol type supported by the IoT terminal, the version, and the algorithm information. The security protocol policy indicates the IoT terminal to access a network based on a procedure of a protocol supported by the IoT terminal when the IoT terminal accesses the network, and to perform encrypted transmission on a packet by using the security protocol in a subsequent packet sending process.

For example, when the information about the IoT terminal includes the software list information, the access device may obtain the software security control policy of the IoT terminal based on the software list information of the IoT terminal. The software security control policy may indicate whether to allow access of the IoT terminal or indicate to perform security control on software used by the IoT terminal. It can be learned from the foregoing that the software list information of the IoT terminal includes the software used by the IoT terminal and the version information of the software. Based on this, the access device may detect, based on the software information included in the software list information, whether each software of the IoT terminal has a security risk, and obtain the software security control policy based on a detection result.

For example, if the access device detects that the software list information includes software that has a security risk, the obtained software security control policy may directly indicate to reject the IoT terminal to access the network. Alternatively, if software that has a security risk is detected, the obtained software security control policy may include software information of the software that has the security risk, and indicates to reject the software that has the security risk to access the network. Alternatively, if software that has a security risk is detected, the obtained software security control policy may indicate to send prompt information to the IoT terminal, to prompt processing of the software that has the security risk. The prompt information may include software information of the software that has the security risk.

Optionally, if the access device detects that the software list information does not include the software that has the security risk, the obtained software security control policy indicates security of the software used by the IoT terminal.

In another possible case, if the information about the IoT terminal includes the device attribute of the IoT terminal, the access device may determine a terminal type of the IoT terminal based on the device attribute of the IoT terminal, and then obtain the network admission policy of the IoT terminal based on the terminal type of the IoT terminal.

It can be learned from the foregoing that the device attribute of the IoT terminal includes the information such as the production place, the production enterprise, the product category, the product sequence number, and the MAC address of the IoT terminal, and the size of the IoT terminal. Therefore, the access device may determine the terminal type of the IoT terminal based on the foregoing attributes. For example, the terminal type of the IoT terminal may be a smart television, a smart refrigerator, a smart printer, or the like.

After determining the terminal type of the IoT terminal, the access device may obtain, from a preset policy library, the network admission policy corresponding to the terminal type of the IoT terminal.

It should be noted that the preset policy library stores network admission policies corresponding to terminals of different types and different regions. The network admission policy corresponding to each terminal of each type and each region is obtained through artificial intelligence (artificial intelligence, AI) analysis and/or historical experience. Obtaining the network admission policy through the AI analysis refers to continuously learning and obtaining network admission policies of terminals of different types by using an AI technical means by analyzing traffic characteristics of terminals of different types and different regions. The obtaining the network admission policy based on the historical experience refers to manually setting, by a network administrator based on past experience, admission policies that correspond to the terminals of different types and different regions.

Optionally, in some possible cases, the device attribute of the IoT terminal may further include location information of the IoT terminal, for example, a region where the IoT terminal is located. In this case, after the terminal type of the IoT terminal is determined, the location information of the IoT terminal may be further obtained, and a policy that corresponds to the terminal type and that is applicable to an address of the IoT terminal is obtained from the preset policy library based on the location information of the IoT terminal and the terminal type of the IoT terminal, so that the network admission policy of the IoT terminal is obtained.

In another possible case, if the information about the IoT terminal includes both the network attribute and the device attribute, the access device may determine the network admission policy of the IoT terminal based on the network attribute and the device attribute of the IoT terminal. In this case, the access device may obtain some policies based on the network attribute and obtain some policies based on the device attribute with reference to the foregoing method, and then combine the two policies to obtain the network admission policy of the IoT terminal.

Optionally, in some possible implementations, after obtaining the industrial internet identifier of the IoT terminal, the access device may send the industrial internet identifier of the IoT terminal to an admission controller. Then, the admission controller may obtain the information about the IoT terminal indicated by the industrial internet identifier of the IoT terminal, and obtain the network admission policy of the IoT terminal based on the information about the IoT terminal. For a method for obtaining the information about the IoT terminal by the admission controller, refer to the foregoing method for obtaining the information about the IoT terminal by the access device. For a method for obtaining the network admission policy of the IoT terminal by the admission controller based on the information about the IoT terminal, refer to the foregoing method for obtaining the network admission policy of the IoT terminal by the access device. Details are not described in this embodiment of this application.

Step 303: Control, based on the network admission policy of the IoT terminal, the IoT terminal to access a network.

After obtaining the network admission policy of the IoT terminal, the access device may control, based on the network admission policy of the IoT terminal, the IoT terminal to access the network.

It can be learned from the foregoing that the network admission policy of the IoT terminal includes at least one of the ACL policy, the QoS policy, the security protocol policy, and the software security control policy. Therefore, methods for controlling the IoT terminal to access by the access device are also different based on different network admission policies.

For example, when the network admission policy of the IoT terminal includes the ACL policy, and when receiving a packet sent by the IoT terminal, the access device may determine a source address and a destination address in which the IoT terminal sends the packet, or determine whether a source address, a destination address, a source port, and a destination port are addresses and ports at which an ACL included in the ACL policy indicates that the packet is allowed to pass. If the source address, the destination address, the source port, and the destination port are the addresses and the ports, the access device allows the packet to pass, that is, the IoT terminal is allowed to communicate with a destination device indicated by the destination address. Certainly, if the source address, the destination address, the source port, and the destination port are not the addresses and the ports at which the ACL included in the ACL policy indicates that the packet is allowed to pass, the packet may be discarded, that is, the IoT terminal is not allowed to communicate with the destination device indicated by the destination address.

When the network admission policy of the IoT terminal includes the QoS policy, the access device may process the packet of the IoT terminal based on a bandwidth and/or a priority that are/is allocated to the IoT terminal and that are/is included in the QoS policy, to ensure that the packet of the IoT terminal can meet a delay requirement. It should be noted that different services of the IoT terminal may correspond to different QoS policies. In this way, the access device may also process, based on the QoS policy corresponding to each service, a packet of a corresponding service sent by the IoT terminal.

When the network admission policy of the IoT terminal includes the security protocol policy, the access device may indicate, based on the security protocol policy, the IoT terminal to access the network based on the procedure of the security protocol supported by the IoT terminal.

When the network admission policy of the IoT terminal includes the software security control policy, the access device may determine, based on the software security control policy, whether to allow the IoT terminal to access the network. For example, if the software security control policy indicates to reject access of the IoT terminal, the access device may directly reject the access of the IoT terminal. If the software security control policy indicates security of software used by the IoT terminal, the access device may not control the access of the IoT terminal based on the software of the IoT terminal. That is, if the network admission policy does not include another policy, the IoT terminal may be directly allowed to access the network. Alternatively, the access device may perform, based on the software security control policy, security control on software used by the IoT terminal. For example, if the software security control policy includes software information of software that has a security risk, the access device may reject access of the software based on the software information, that is, discard packets of the software. If the software security control policy indicates to send prompt information, the access device may send the prompt information to the IoT terminal. The prompt information includes software information of software that has a security risk in the IoT terminal, and is used for prompting a user to process the software, for example, upgrade, uninstall, or stop running the corresponding software.

In embodiments of this application, because the information about the IoT terminal indicated by the industrial internet identifier of the IoT terminal is accurate, the network admission policy of the IoT terminal that is determined based on the information about the IoT terminal indicated by the industrial internet identifier of the IoT terminal is also accurate. Based on this, access of the terminal is controlled based on the network admission policy, so that a network security risk caused when the IoT terminal accesses a network can be reduced, and security of accessing the network by the IoT terminal can be improved.

In addition, in embodiments of this application, the information about the IoT terminal may include the network attribute, and the network attribute may include one or more of access configuration information, SLA information, network security information, and software list information of the IoT terminal. Based on this, the network admission policy obtained with reference to the information is more accurate, so that security of accessing the network by the IoT terminal is further improved.

In addition, in embodiments of this application, the information about the IoT terminal may include the device attribute of the IoT terminal. Because the device attribute obtained based on the industrial internet identifier is accurate, the terminal type of the IoT terminal determined based on the device attribute is also more accurate. Based on this, the network admission policy obtained based on the terminal type of the IoT terminal is also accurate, so that security of accessing the network by the IoT terminal is improved.

According to the method described in the foregoing embodiment, FIG. 4 is a flowchart in which a method for controlling a terminal to access a network is implemented through interaction between devices. Refer to FIG. 4. The method includes the following steps.

Step 401: An IoT terminal sends an industrial internet identifier of the IoT terminal to an access device.

For an implementation process of this step, refer to the implementation described in step 301.

Step 402: The access device sends the industrial internet identifier of the IoT terminal to an identifier resolution server.

Step 403: The identifier resolution server obtains information that is about the IoT terminal and that corresponds to the industrial internet identifier of the IoT terminal.

For an implementation process of this step, refer to the related implementation described in step 302.

Step 404: The identifier resolution server sends the information about the IoT terminal to the access device.

Step 405: The access device obtains a network admission policy of the IoT terminal based on the information about the IoT terminal.

For an implementation of this step, refer to the implementation process of obtaining the network admission policy by the access device described in step 302.

Step 406: The access device controls, based on the network admission policy of the IoT terminal, the IoT terminal to access a network.

For an implementation of this step, refer to the implementation described in step 303.

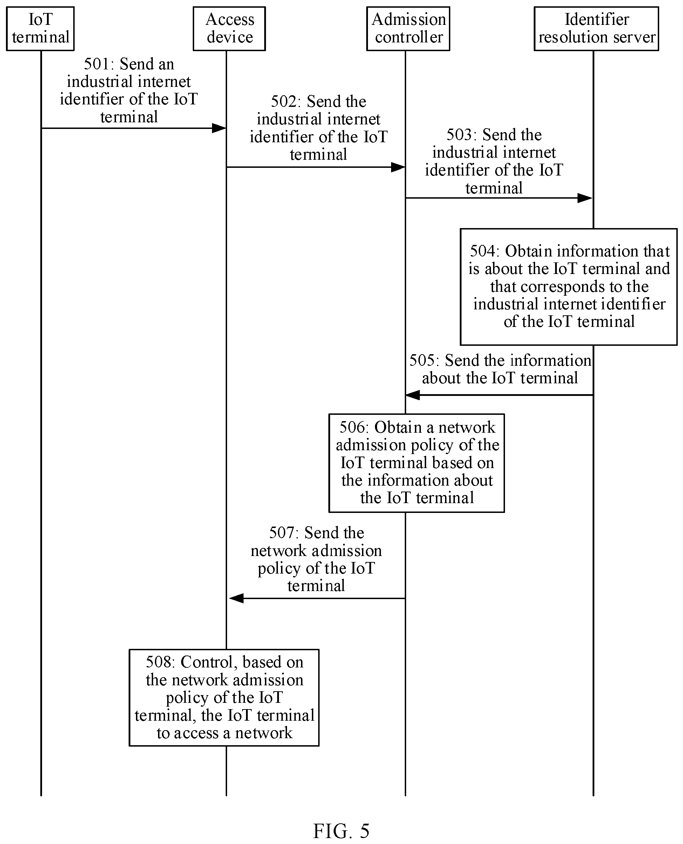

FIG. 5 is a flowchart in which a method for controlling a terminal to access a network is implemented through interaction between devices according to an embodiment of this application. Refer to FIG. 5. The method includes the following steps.

Step 501: An IoT terminal sends an industrial internet identifier of the IoT terminal to an access device.

For an implementation process of this step, refer to the implementation described in step 301.

Step 502: The access device sends the industrial internet identifier of the IoT terminal to an admission controller.

Step 503: The admission controller sends the industrial internet identifier of the IoT terminal to an identifier resolution server.

Step 504: The identifier resolution server obtains information that is about the IoT terminal and that corresponds to the industrial internet identifier of the IoT terminal.

For an implementation process of this step, refer to the related implementation described in step 302.

Step 505: The identifier resolution server sends the information about the IoT terminal to the admission controller.

Step 506: The admission controller obtains a network admission policy of the IoT terminal based on the information about the IoT terminal.

For an implementation of this step, refer to the implementation process of obtaining the network admission policy by the access device described in step 302.

Step 507: The admission controller sends the network admission policy of the IoT terminal to the access device.

Step 508: The access device controls, based on the network admission policy of the IoT terminal, the IoT terminal to access a network.

For an implementation process of this step, refer to the implementation described in step 303.

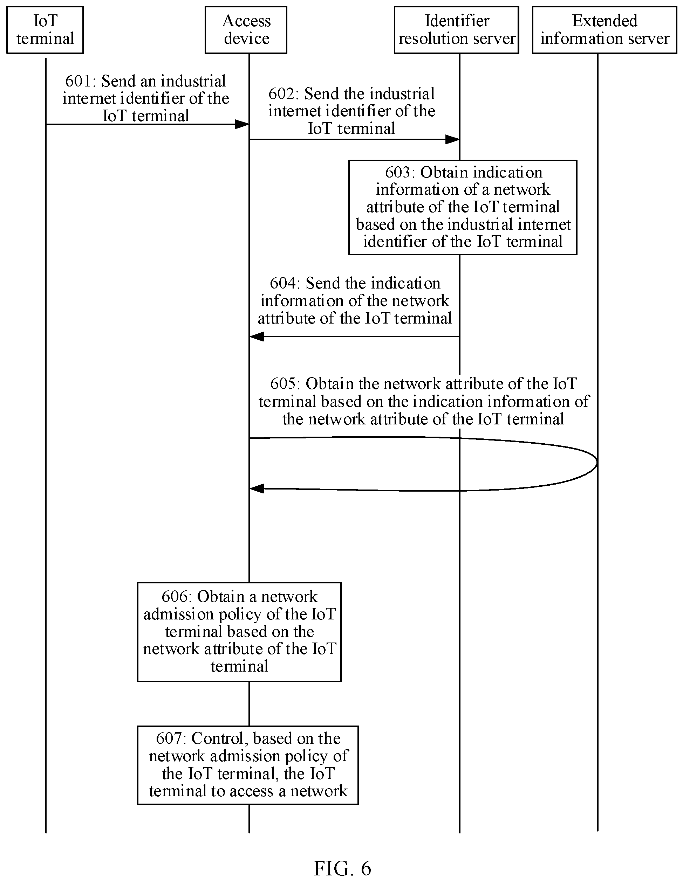

FIG. 6 is another flowchart in which a method for controlling a terminal to access a network is implemented through interaction between devices according to an embodiment of this application. Refer to FIG. 6. The method includes the following steps.

Step 601: An IoT terminal sends an industrial internet identifier of the IoT terminal to an access device.

For an implementation process of this step, refer to the implementation described in step 301.

Step 602: The access device sends the industrial internet identifier of the IoT terminal to an identifier resolution server.

Step 603: The identifier resolution server obtains indication information of a network attribute of the IoT terminal based on the industrial internet identifier of the IoT terminal.

For an implementation process of this step, refer to the related implementation described in step 302.

In addition, when the indication information of the network attribute of the IoT terminal is obtained, a device attribute of the IoT terminal may be further obtained based on the industrial internet identifier of the IoT terminal.

Step 604: The identifier resolution server sends the indication information of the network attribute of the IoT terminal to the access device.

In this case, the device attribute of the IoT terminal may be further fed back to the access device.

Step 605: The access device obtains the network attribute of the IoT terminal from an extended information server based on the indication information of the network attribute of the IoT terminal.

Step 606: The access device obtains a network admission policy of the IoT terminal based on the network attribute of the IoT terminal.

For an implementation process of this step, refer to the implementation described in step 302.

Step 607: The access device controls, based on the network admission policy of the IoT terminal, the IoT terminal to access a network.

For an implementation process of this step, refer to the implementation described in step 303.

An apparatus for controlling a terminal to access a network according to an embodiment of this application is described below.

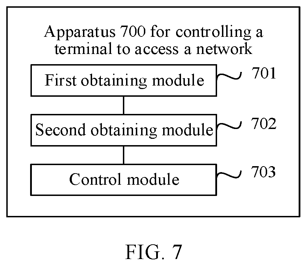

Refer to FIG. 7. An embodiment of this application provides an apparatus 700 for controlling a terminal to access a network. The apparatus 700 includes a first obtaining module 701, a second obtaining module 702, and a control module 703.

The first obtaining module 701 is configured to perform step 301 in the foregoing embodiment.

The second obtaining module 702 is configured to perform step 302 in the foregoing embodiment.

The control module 703 is configured to perform step 303 in the foregoing embodiment.

It should be noted that the modules in the apparatus 700 may be implemented by the processor in the network device shown in FIG. 2 executing the program code stored in the memory.

The second obtaining module 702 is configured to:
obtain information about an IoT terminal indicated by an industrial internet identifier of the IoT terminal, where the information about the IoT terminal includes a network attribute of the IoT terminal; and
determine a network admission policy of the IoT terminal based on the network attribute of the IoT terminal.

Optionally, the network attribute includes at least one of access configuration information, SLA information, network security information, and software list information that indicate the IoT terminal.

Optionally, the network admission policy includes at least one of an access control list ACL policy, a QoS policy, a security protocol policy, and a software security control policy.

Optionally, the second obtaining module 702 is configured to:
when the network attribute includes the access configuration information, obtain the ACL policy of the IoT terminal based on the access configuration information of the IoT terminal, where the access configuration information of the IoT terminal includes at least one of address information, port information, protocol information, and corresponding action information.

Optionally, the second obtaining module 702 is configured to:
when the network attribute includes the SLA information, obtain the QoS policy of the IoT terminal based on the SLA information of the IoT terminal, where the SLA information of the IoT terminal includes at least one of a bandwidth requirement, a priority requirement, and a delay requirement of the IoT terminal.

Optionally, the second obtaining module 702 is configured to:
when the network attribute includes the network security information, obtain the security protocol policy of the IoT terminal based on the network security information of the IoT terminal, where the network security information of the IoT terminal includes information about a security protocol supported by the IoT terminal.

Optionally, the second obtaining module 702 is configured to:
when the network attribute includes the software list information, obtain the software security control policy of the IoT terminal based on the software list information of the IoT terminal, where the software security control policy indicates whether to allow access of the IoT terminal or indicates to perform security control on software used by the IoT terminal, and the software list information includes information about the software used by the IoT terminal.

Optionally, the second obtaining module 702 is configured to:
send the industrial internet identifier of the IoT terminal to an identifier resolution server;
receive indication information, of the network attribute, that corresponds to the industrial internet identifier of the IoT terminal and that is sent by the identifier resolution server; and
obtain the network attribute of the IoT terminal from an extended information server based on the indication information of the network attribute.

Optionally, the second obtaining module 702 is configured to:
obtain the information about the IoT terminal indicated by the industrial internet identifier of the IoT terminal, where the information about the IoT terminal includes a device attribute of the IoT terminal;
determine a terminal type of the IoT terminal based on the device attribute of the IoT terminal; and
obtain the network admission policy of the IoT terminal based on the terminal type of the IoT terminal.

Optionally, the second obtaining module 702 is configured to:
send the industrial internet identifier of the IoT terminal to an identifier resolution server; and
receive the information, about the IoT terminal, that corresponds to the industrial internet identifier of the IoT terminal and that is sent by the identifier resolution server.

Based on the foregoing, in embodiments of this application, because the information about the IoT terminal indicated by the industrial internet identifier of the IoT terminal is accurate, the network admission policy of the IoT terminal that is determined based on the information about the IoT terminal indicated by the industrial internet identifier of the IoT terminal is also accurate. Based on this, access of the terminal is controlled based on the network admission policy, so that a network security risk caused when the IoT terminal accesses a network can be reduced, and security of accessing the network by the IoT terminal can be improved.

It should be noted that, when the apparatus for controlling a terminal to access a network provided in the foregoing embodiment controls a terminal to access to a network, division of the foregoing functional modules is merely used as an example for description. In actual application, the foregoing functions may be allocated to different functional modules for implementation based on a requirement, that is, an internal structure of the device is divided into different functional modules, to implement all or some of the foregoing described functions. In addition, the apparatus for controlling a terminal to access a network provided in the foregoing embodiment and the method embodiments for controlling a terminal to access a network belong to a same concept. For a specific implementation process, refer to the method embodiments, and details are not described herein again.

All or some of the foregoing embodiments may be implemented by software, hardware, firmware, or any combination thereof. When software is used to implement the foregoing embodiments, all or some of embodiments may be implemented in a form of a computer program product. The computer program product includes one or more computer instructions. When the computer instructions are loaded and executed on a computer, all or some of the procedures or functions according to embodiments of this application are generated. The computer may be a general-purpose computer, a dedicated computer, a computer network, or any other programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (Digital Subscriber Line, DSL)) or wireless (for example, infrared, radio, and microwave) manner. The computer-readable storage medium may be any usable medium accessible by the computer, or a data storage device, such as a server or a data center integrated with one or more usable media. The usable medium may be a magnetic medium (for example, a floppy disk, a hard disk, or a magnetic tape), an optical medium (for example, a digital versatile disc (Digital Versatile Disc, DVD)), a semiconductor medium (for example, a solid-state drive (Solid-State Drive, SSD)), or the like.

A person of ordinary skill in the art may understand that all or some of the steps of embodiments may be implemented by hardware or a program instructing related hardware. The program may be stored in a computer-readable storage medium. The foregoing storage medium may be a read-only memory, a magnetic disk, or an optical disc.

The foregoing descriptions are merely example embodiments of this application, but are not intended to limit this application.

## Claims

1. A method for controlling a terminal (101) to access a network, wherein the method comprises:
obtaining (301) an industrial internet identifier of an internet of things, IoT, terminal (101);
obtaining (302) a network admission policy of the IoT terminal (101) based on the industrial internet identifier of the IoT terminal (101), wherein the network admission policy is determined based on information about the IoT terminal (101) indicated by the industrial internet identifier of the IoT terminal (101); and
controlling (303), based on the network admission policy of the IoT terminal (101), the IoT terminal (101) to access a network,
**characterized in that**
the obtaining (302) a network admission policy of the IoT terminal (101) based on the industrial internet identifier of the IoT terminal (101) comprises:
obtaining the information about the IoT terminal (101) indicated by the industrial internet identifier of the IoT terminal (101), wherein the information about the IoT terminal (101) comprises a network attribute of the IoT terminal (101); and
determining (606) the network admission policy of the IoT terminal (101) based on the network attribute of the IoT terminal (101),
wherein the obtaining the information about the IoT terminal (101) indicated by the industrial internet identifier of the IoT terminal (101) comprises:
sending (602) the industrial internet identifier of the IoT terminal (101) to an identifier resolution server (104);
receiving (604) indication information that is of the network attribute of the IoT terminal (101) and that is sent by the identifier resolution server (104); and
obtaining (605) the network attribute of the IoT terminal (101) from an extended information server (105) based on the indication information of the network attribute.

2. The method according to claim 1, wherein the network attribute comprises at least one of access configuration information, service level agreement SLA information, network security information, and software list information that indicate the IoT terminal (101).

3. The method according to claim 1 or 2, wherein the network admission policy comprises at least one of an access control list, ACL, policy, a QoS policy, a security protocol policy, and a software security control policy.

4. The method according to claim 3, wherein the determining (606) the network admission policy of the IoT terminal (101) based on the network attribute of the IoT terminal (101) comprises:
when the network attribute comprises the access configuration information, obtaining the ACL policy of the IoT terminal (101) based on the access configuration information of the IoT terminal (101), wherein the access configuration information of the IoT terminal (101) comprises at least one of address information, port information, protocol information, and corresponding action information.

5. The method according to claim 3, wherein the determining (606) the network admission policy of the IoT terminal (101) based on the network attribute of the IoT terminal (101) comprises:
when the network attribute comprises the SLA information, obtaining the QoS policy of the IoT terminal (101) based on the SLA information of the IoT terminal (101), wherein the SLA information of the IoT terminal (101) comprises at least one of a bandwidth requirement, a priority requirement, and a delay requirement of the IoT terminal (101).

6. The method according to claim 3, wherein the determining (606) the network admission policy of the IoT terminal (101) based on the network attribute of the IoT terminal (101) comprises:
when the network attribute comprises the network security information, obtaining the security protocol policy of the IoT terminal (101) based on the network security information of the IoT terminal, wherein the network security information of the IoT terminal (101) comprises information about a security protocol supported by the IoT terminal (101).

7. The method according to claim 3, wherein the determining (606) the network admission policy of the IoT terminal (101) based on the network attribute of the IoT terminal (101) comprises:
when the network attribute comprises the software list information, obtaining the software security control policy of the IoT terminal (101) based on the software list information of the IoT terminal (101), wherein the software security control policy indicates whether to allow access of the IoT terminal (101) or indicates to perform security control on software used by the IoT terminal (101), and the software list information comprises information about the software used by the IoT terminal (101).

8. The method according to claim 1, wherein the obtaining a network admission policy of the IoT terminal (101) based on the industrial internet identifier of the IoT terminal (101) comprises:
obtaining the information about the IoT terminal (101) indicated by the industrial internet identifier of the IoT terminal (101), wherein the information about the IoT terminal (101) comprises a device attribute of the IoT terminal (101);
determining a terminal type of the IoT terminal (101) based on the device attribute of the IoT terminal (101); and
obtaining the network admission policy of the IoT terminal (101) based on the terminal type of the IoT terminal (101).

9. The method according to any one of claims 1 to 7 and claim 8, wherein the obtaining the information about the IoT terminal (101) indicated by the industrial internet identifier of the IoT terminal (101) comprises:
sending (402) the industrial internet identifier of the IoT terminal (101) to an identifier resolution server (104); and
receiving (404) the information, about the IoT terminal (101), that corresponds to the industrial internet identifier of the IoT terminal (101) and that is sent by the identifier resolution server (104).

10. An access device (102), wherein the access device (102) is configured and intended to perform any one of the methods according to claims 1 to 9.

11. A network system, wherein the network system comprises an IoT terminal (101) and an access device (102);
the IoT terminal (101) is configured to send an industrial internet identifier of the IoT terminal (101) to the access device (102); and
the access device (102) is configured and intended to perform any one of the methods according to claims 1 to 10.

12. The network system according to claim 11, wherein the network system further comprises an admission controller;
the access device (102) is configured to send the industrial internet identifier of the IoT terminal (101) to the admission controller (103);
the admission controller (103) is configured to obtain the information about the IoT terminal (101) indicated by the industrial internet identifier of the IoT terminal (101); determine the network admission policy of the IoT terminal based on the information about the IoT terminal (101), wherein the information about the IoT terminal comprises the network attribute of the IoT terminal (101); and send the network admission policy of the IoT terminal (101) to the access device (102); and
the access device (102) is further configured to receive the network admission policy of the IoT terminal (101) sent by the admission controller (103).

13. A computer-readable storage medium, wherein the computer-readable storage medium stores instructions, and when the instructions are run on a computer, the computer is caused to perform the method for controlling a terminal to access a network according to any one of claims 1 to 9.

14. A computer program product including instructions, wherein when the instructions are run on a computer, the computer is caused to perform the method for controlling a terminal to access a network according to any one of claims 1 to 9.

## Patentansprüche

1. Verfahren zum Steuern eines Endgeräts (101), um auf ein Netz zuzugreifen, wobei das Verfahren Folgendes umfasst:
Erlangen (301) einer industriellen Internetkennung eines Internet-der-Dinge-Endgeräts, IoT-Endgeräts (101);
Erlangen (302) einer Netzzulassungsrichtlinie des IoT-Endgeräts (101) basierend auf der industriellen Internetkennung des IoT-Endgeräts (101), wobei die Netzzulassungsrichtlinie basierend auf Informationen über das IoT-Endgerät (101) bestimmt wird, die durch die industrielle Internetkennung des IoT-Endgeräts (101) angegeben werden; und
Steuern (303), basierend auf der Netzzulassungsrichtlinie des IoT-Endgeräts (101), des IoT-Endgeräts (101), um auf ein Netz zuzugreifen,
**dadurch gekennzeichnet, dass**
das Erlangen (302) einer Netzzulassungsrichtlinie des IoT-Endgeräts (101) basierend auf der industriellen Internetkennung des IoT-Endgeräts (101) Folgendes umfasst:
Erlangen der Informationen über das IoT-Endgerät (101), die durch die industrielle Internetkennung des IoT-Endgeräts (101) angegeben werden, wobei die Informationen über das IoT-Endgerät (101) ein Netzattribut des IoT-Endgeräts (101) umfassen; und
Bestimmen (606) der Netzzulassungsrichtlinie des IoT-Endgeräts (101) basierend auf dem Netzattribut des IoT-Endgeräts (101),
wobei das Erlangen der Informationen über das IoT-Endgerät (101), die durch die industrielle Internetkennung des IoT-Endgeräts (101) angegeben werden, Folgendes umfasst:
Senden (602) der industriellen Internetkennung des IoT-Endgeräts (101) an einen Kennungsauflösungsserver (104);
Empfangen (604) von Angabeinformationen, die dem Netzattribut des IoT-Endgeräts (101) angehören und die durch den Kennungsauflösungsserver (104) gesendet werden; und
Erlangen (605) des Netzattributs des IoT-Endgeräts (101) von einem erweiterten Informationsserver (105) basierend auf den Angabeinformationen des Netzattributs.

2. Verfahren nach Anspruch 1, wobei das Netzattribut mindestens eines von Zugriffskonfigurationsinformationen, Dienstleistungsvereinbarungsinformationen, SLA-Informationen, Netzsicherheitsinformationen und Softwarelisteninformationen umfasst, die das IoT-Endgerät (101) angeben.

3. Verfahren nach Anspruch 1 oder 2, wobei die Netzzulassungsrichtlinie mindestens eine einer Zugriffssteuerungslistenrichtlinie, ACL-Richtlinie, einer QoS-Richtlinie, einer Sicherheitsprotokollrichtlinie und einer Softwaresicherheitssteuerungsrichtlinie umfasst.

4. Verfahren nach Anspruch 3, wobei das Bestimmen (606) der Netzzulassungsrichtlinie des IoT-Endgeräts (101) basierend auf dem Netzattribut des IoT-Endgeräts (101) Folgendes umfasst:
wenn das Netzattribut die Zugriffskonfigurationsinformationen umfasst, Erlangen der ACL-Richtlinie des IoT-Endgeräts (101) basierend auf den Zugriffskonfigurationsinformationen des IoT-Endgeräts (101), wobei die Zugriffskonfigurationsinformationen des IoT-Endgeräts (101) mindestens eines von Adressinformationen, Anschlussinformationen, Protokollinformationen und entsprechenden Handlungsinformationen umfassen.

5. Verfahren nach Anspruch 3, wobei das Bestimmen (606) der Netzzulassungsrichtlinie des IoT-Endgeräts (101) basierend auf dem Netzattribut des IoT-Endgeräts (101) Folgendes umfasst:
wenn das Netzattribut die SLA-Informationen umfasst, Erlangen der QoS-Richtlinie des IoT-Endgeräts (101) basierend auf den SLA-Informationen des IoT-Endgeräts (101), wobei die SLA-Informationen des IoT-Endgeräts (101) mindestens eines von einem Bandbreitenerfordernis, einem Prioritätserfordernis und einem Verzögerungserfordernis des IoT-Endgeräts (101) umfassen.

6. Verfahren nach Anspruch 3, wobei das Bestimmen (606) der Netzzulassungsrichtlinie des IoT-Endgeräts (101) basierend auf dem Netzattribut des IoT-Endgeräts (101) Folgendes umfasst:
wenn das Netzattribut die Netzsicherheitsinformationen umfasst, Erlangen der Sicherheitsprotokollrichtlinie des IoT-Endgeräts (101) basierend auf den Netzsicherheitsinformationen des IoT-Endgeräts, wobei die Netzsicherheitsinformationen des IoT-Endgeräts (101) Informationen über ein Sicherheitsprotokoll umfassen, das durch das IoT-Endgerät (101) unterstützt wird.

7. Verfahren nach Anspruch 3, wobei das Bestimmen (606) der Netzzulassungsrichtlinie des IoT-Endgeräts (101) basierend auf dem Netzattribut des IoT-Endgeräts (101) Folgendes umfasst:
wenn das Netzattribut die Softwarelisteninformationen umfasst, Erlangen der Softwaresicherheitssteuerungsrichtlinie des IoT-Endgeräts (101) basierend auf den Softwarelisteninformationen des IoT-Endgeräts (101), wobei die Softwaresicherheitssteuerungsrichtlinie angibt, ob der Zugriff des IoT-Endgeräts (101) zu erlauben ist, oder angibt, eine Sicherheitssteuerung an einer Software durchzuführen, die durch das IoT-Endgerät (101) verwendet wird, und die Softwarelisteninformationen Informationen über die Software umfassen, die durch das IoT-Endgerät (101) verwendet wird.

8. Verfahren nach Anspruch 1, wobei das Erlangen einer Netzzulassungsrichtlinie des IoT-Endgeräts (101) basierend auf der industriellen Internetkennung des IoT-Endgeräts (101) Folgendes umfasst:
Erlangen der Informationen über das IoT-Endgerät (101), die durch die industrielle Internetkennung des IoT-Endgeräts (101) angegeben werden, wobei die Informationen über das IoT-Endgerät (101) ein Vorrichtungsattribut des IoT-Endgeräts (101) umfassen;
Bestimmen einer Endgeräteart des IoT-Endgeräts (101) basierend auf dem Vorrichtungsattribut des IoT-Endgeräts (101); und
Erlangen der Netzzulassungsrichtlinie des IoT-Endgeräts (101) basierend auf der Endgeräteart des IoT-Endgeräts (101).

9. Verfahren nach einem der Ansprüche 1 bis 7 und Anspruch 8, wobei das Erlangen der Informationen über das IoT-Endgerät (101), die durch die industrielle Internetkennung des IoT-Endgeräts (101) angegeben werden, Folgendes umfasst:
Senden (402) der industriellen Internetkennung des IoT-Endgeräts (101) an einen Kennungsauflösungsserver (104); und
Empfangen (404) der Informationen über das IoT-Endgerät (101), die der industriellen Internetkennung des IoT-Endgeräts (101) entsprechen und die durch den Kennungsauflösungsserver (104) gesendet werden.

10. Zugriffsvorrichtung (102), wobei die Zugriffsvorrichtung (102) dazu konfiguriert und vorgesehen ist, eines der Verfahren nach Anspruch 1 bis 9 durchzuführen.

11. Netzsystem, wobei das Netzsystem ein IoT-Endgerät (101) und eine Zugriffsvorrichtung (102) umfasst;
das IoT-Endgerät (101) dazu konfiguriert ist, eine industrielle Internetkennung des IoT-Endgeräts (101) an die Zugriffsvorrichtung (102) zu senden; und
die Zugriffsvorrichtung (102) dazu konfiguriert und vorgesehen ist, eines der Verfahren nach Anspruch 1 bis 10 durchzuführen.

12. Netzsystem nach Anspruch 11, wobei das Netzsystem ferner eine Zulassungssteuerung umfasst;
die Zugriffsvorrichtung (102) dazu konfiguriert ist, die industrielle Internetkennung des IoT-Endgeräts (101) an die Zulassungssteuerung (103) zu senden;
die Zulassungssteuerung (103) dazu konfiguriert ist, die Informationen über das IoT-Endgerät (101) zu erlangen, die durch die industrielle Internetkennung des IoT-Endgeräts (101) angegeben werden; die Netzzulassungsrichtlinie des IoT-Endgeräts basierend auf den Informationen über das IoT-Endgerät (101) zu bestimmen, wobei die Informationen über das IoT-Endgerät das Netzattribut des IoT-Endgeräts (101) umfassen; und die Netzzulassungsrichtlinie des IoT-Endgeräts (101) an die Zugriffsvorrichtung (102) zu senden; und
die Zugriffsvorrichtung (102) ferner dazu konfiguriert ist, die Netzzulassungsrichtlinie des IoT-Endgeräts (101) zu empfangen, die durch die Zulassungssteuerung (103) gesendet wird.

13. Computerlesbares Speichermedium, wobei das computerlesbare Speichermedium Anweisungen speichert und, wenn die Anweisungen auf einem Computer ausgeführt werden, der Computer dazu veranlasst wird, das Verfahren zum Steuern eines Endgeräts, um auf ein Netz zuzugreifen, nach einem der Ansprüche 1 bis 9 durchzuführen.

14. Computerprogrammprodukt, beinhaltend Anweisungen, wobei, wenn die Anweisungen auf einem Computer ausgeführt werden, der Computer dazu veranlasst wird, das Verfahren zum Steuern eines Endgeräts, um auf ein Netz zuzugreifen, nach einem der Ansprüche 1 bis 9 durchzuführen.

## Revendications

1. Procédé de commande d'accès à un réseau par un terminal (101) dans lequel le procédé comprend :
l'obtention (301) d'un identifiant Internet industriel d'un terminal (101) de l'Internet des objets, IoT ;
l'obtention (302) d'une politique d'admission au réseau du terminal IoT (101) sur la base de l'identifiant Internet industriel du terminal IoT (101), dans lequel la politique d'admission au réseau est déterminée sur la base des informations concernant le terminal IoT (101) indiquées par l'identifiant Internet industriel du terminal IoT (101) ; et
la commande (303), sur la base de la politique d'admission au réseau du terminal IoT (101), de l'accès à un réseau par un terminal IoT (101),
**caractérisé en ce que**
l'obtention (302) d'une politique d'admission au réseau du terminal IoT (101) sur la base de l'identifiant Internet industriel du terminal IoT (101) comprend :
l'obtention des informations concernant le terminal IoT (101) indiquées par l'identifiant Internet industriel du terminal IoT (101), dans lequel les informations concernant le terminal IoT (101) comprennent un attribut réseau du terminal IoT (101) ; et la détermination (606) de la politique d'admission au réseau du terminal IoT (101) sur la base de l'attribut réseau du terminal IoT (101),
dans lequel l'obtention des informations concernant le terminal IoT (101) indiquées par l'identifiant Internet industriel du terminal IoT (101) comprend :
l'envoi (602) de l'identifiant Internet industriel du terminal IoT (101) à un serveur de résolution d'identifiant (104) ;
la réception (604) d'informations d'indication qui sont de l'attribut réseau du terminal IoT (101) et qui sont envoyées par le serveur de résolution d'identifiant (104) ; et
l'obtention (605) de l'attribut réseau du terminal IoT (101) à partir d'un serveur d'informations étendu (105) sur la base des informations d'indication de l'attribut réseau.

2. Procédé selon la revendication 1, dans lequel l'attribut réseau comprend au moins l'une des informations de configuration d'accès, des informations d'accord de niveau de service SLA, des informations de sécurité réseau et des informations de liste de logiciels qui indiquent le terminal IoT (101).

3. Procédé selon la revendication 1 ou 2, dans lequel la politique d'admission au réseau comprend au moins l'une d'une politique de liste de commande d'accès, ACL, d'une politique QoS, d'une politique de protocole de sécurité et d'une politique de commande de sécurité logicielle.

4. Procédé selon la revendication 3, dans lequel la détermination (606) de la politique d'admission au réseau du terminal IoT (101) sur la base de l'attribut réseau du terminal IoT (101) comprend :
lorsque l'attribut réseau comprend les informations de configuration d'accès, l'obtention de la politique ACL du terminal IoT (101) sur la base des informations de configuration d'accès du terminal IoT (101), dans lequel les informations de configuration d'accès du terminal IoT (101) comprennent au moins l'une des informations d'adresse, des informations de port, des informations de protocole et des informations d'action correspondantes.

5. Procédé selon la revendication 3, dans lequel la détermination (606) de la politique d'admission au réseau du terminal IoT (101) sur la base de l'attribut réseau du terminal IoT (101) comprend :
lorsque l'attribut réseau comprend les informations SLA, l'obtention de la politique QoS du terminal IoT (101) sur la base des informations SLA du terminal IoT (101), dans lequel les informations SLA du terminal IoT (101) comprennent au moins l'une d'une exigence de bande passante, d'une exigence de priorité et d'une exigence de retard du terminal IoT (101).

6. Procédé selon la revendication 3, dans lequel la détermination (606) de la politique d'admission au réseau du terminal IoT (101) sur la base de l'attribut réseau du terminal IoT (101) comprend :
lorsque l'attribut réseau comprend les informations de sécurité réseau, l'obtention de la politique de protocole de sécurité du terminal IoT (101) sur la base des informations de sécurité réseau du terminal IoT, dans lequel les informations de sécurité réseau du terminal IoT (101) comprennent des informations concernant un protocole de sécurité pris en charge par le terminal IoT (101).

7. Procédé selon la revendication 3, dans lequel la détermination (606) de la politique d'admission au réseau du terminal IoT (101) sur la base de l'attribut réseau du terminal IoT (101) comprend :
lorsque l'attribut réseau comprend les informations de liste de logiciels, l'obtention de la politique de commande de sécurité logicielle du terminal IoT (101) sur la base des informations de liste de logiciels du terminal IoT (101), dans lequel la politique de commande de sécurité logicielle indique s'il faut autoriser l'accès au terminal IoT (101) ou indique de réaliser une commande de sécurité sur le logiciel utilisé par le terminal IoT (101), et les informations de liste de logiciels comprennent des informations concernant le logiciel utilisé par le terminal IoT (101).

8. Procédé selon la revendication 1, dans lequel l'obtention d'une politique d'admission au réseau du terminal IoT (101) sur la base de l'identifiant Internet industriel du terminal IoT (101) comprend :
l'obtention des informations concernant le terminal IoT (101) indiquées par l'identifiant Internet industriel du terminal IoT (101), dans lequel les informations concernant le terminal IoT (101) comprennent un attribut de dispositif du terminal IoT (101) ;
la détermination d'un type de terminal du terminal IoT (101) sur la base de l'attribut de dispositif du terminal IoT (101) ; et
l'obtention de la politique d'admission au réseau du terminal IoT (101) sur la base du type de terminal du terminal IoT (101).

9. Procédé selon l'une quelconque des revendications 1 à 7 et la revendication 8, dans lequel l'obtention des informations concernant le terminal IoT (101) indiquées par l'identifiant Internet industriel du terminal IoT (101) comprend :
l'envoi (402) de l'identifiant Internet industriel du terminal IoT (101) à un serveur de résolution d'identifiant (104) ; et
la réception (404) des informations, concernant le terminal IoT (101), qui correspondent à l'identifiant Internet industriel du terminal IoT (101) et qui sont envoyées par le serveur de résolution d'identifiant (104).

10. Dispositif d'accès (102), dans lequel le dispositif d'accès (102) est configuré et destiné à réaliser l'un quelconque des procédés selon les revendications 1 à 9.

11. Système de réseau, dans lequel le système de réseau comprend un terminal IoT (101) et un dispositif d'accès (102) ;
le terminal IoT (101) est configuré pour envoyer un identifiant Internet industriel du terminal IoT (101) au dispositif d'accès (102) ; et
le dispositif d'accès (102) est configuré et destiné à réaliser l'un quelconque des procédés selon les revendications 1 à 10.

12. Système de réseau selon la revendication 11, dans lequel le système de réseau comprend également un dispositif de commande d'admission ;
le dispositif d'accès (102) est configuré pour envoyer l'identifiant Internet industriel du terminal IoT (101) au dispositif de commande d'admission (103) ;
le dispositif de commande d'admission (103) est configuré pour obtenir les informations concernant le terminal IoT (101) indiquées par l'identifiant Internet industriel du terminal IoT (101) ; déterminer la politique d'admission au réseau du terminal IoT sur la base des informations concernant le terminal IoT (101), dans lequel les informations concernant le terminal IoT comprennent l'attribut réseau du terminal IoT (101) ; et
envoyer la politique d'admission au réseau du terminal IoT (101) au dispositif d'accès (102) ; et
le dispositif d'accès (102) est également configuré pour recevoir la politique d'admission au réseau du terminal IoT (101) envoyée par le dispositif de commande d'admission (103).

13. Support de stockage lisible par ordinateur, dans lequel le support de stockage lisible par ordinateur stocke des instructions, et lorsque les instructions sont exécutées sur un ordinateur, l'ordinateur est amené à réaliser le procédé de commande d'accès à un réseau par un terminal selon l'une quelconque des revendications 1 à 9.

14. Produit de programme informatique comportant des instructions, dans lequel lorsque les instructions sont exécutées sur un ordinateur, l'ordinateur est amené à réaliser le procédé de commande d'accès à un réseau par un terminal selon l'une quelconque des revendications 1 à 9.
